# EUROPÄISCHE PATENTANMELDUNG

(11) **EP 4 749 840 A1**
(43) Veröffentlichungstag der Anmeldung: **27.05.2026**
(21) Anmeldenummer: 25306940.5
(22) Anmeldetag: 24.11.2025
(51) Int. Cl.: H01R 13/52, H01R 24/78, H02G 3/08

(54) **STECKDOSENGEHÄUSE**

(30) Priorität: 25.11.2024 DE 102024134683
(71) Anmelder: SCHNEIDER ELECTRIC INDUSTRIES SAS, 92500 Rueil-Malmaison (FR)
(72) Erfinder: GÖRLICH, Wolfgang, 53804 Much (DE)
(74) Vertreter: Manitz Finsterwald Patent- und Rechtsanwaltspartnerschaft mbB

(57) **Zusammenfassung**

Ein Steckdosengehäuse weist eine Vorderseite auf, von der aus sich ein Steckdosentopf mit einer Mittelachse in das Gehäuseinnere erstreckt, wobei der Steckdosentopf in axialer Richtung mit einem Ringsteg über die Vorderseite des Steckdosengehäuses vorsteht.

## Beschreibung

Die vorliegende Erfindung betrifft ein Steckdosengehäuse mit einer Vorderseite, von der aus sich ein Steckdosentopf mit einer Mittelachse in das Gehäuseinnere erstreckt, wobei der Steckdosentopf in axialer Richtung mit einem Ringsteg über die Vorderseite des Gehäuses vorsteht.

Derartige Steckdosengehäuse sind grundsätzlich als Aufputzgehäuse oder auch Unterputzgehäuse bekannt und dienen zur Aufnahme eines Steckdosensockels, der mit elektrischen Kontakten versehen ist. Für eine wasserfeste Abdichtung des Gehäuses kann dieses mit einem den Ringsteg umgebenden Deckel verschlossen werden, wenn kein Stecker eingesteckt ist. Bei in das Steckdosengehäuse eingestecktem Stecker kann jedoch unter Umständen Flüssigkeit (Regen, Spritzwasser) in das Gehäuseinnere gelangen und sich dort unerwünscht ansammeln.

Es ist deshalb die Aufgabe der vorliegenden Erfindung, ein Steckdosengehäuse der eingangs genannten Art zu schaffen, das einen verbesserten Schutz gegen eine Wasseransammlung im Inneren des Gehäuses, insbesondere bei eingestecktem Stecker aufweist.

Die Lösung dieser Aufgabe erfolgt durch die Merkmale des Anspruchs 1 und insbesondere dadurch, dass am vorderen unteren Rand des Steckdosentopfes ein Drainagekanal zum Ausleiten von Flüssigkeit vorhanden ist. Durch diesen Drainagekanal kann Flüssigkeit, die bei eingestecktem Stecker von außen in den Steckdosentopf gelangt ist, aus diesem ausgeleitet werden, so dass sich diese nicht in dem Steckdosentopf ansammelt und unter Umständen eine leitende Verbindung zwischen spannungsführenden Kontakten und Erdkontakten herstellt.

Vorteilhafte Ausführungsformen der Erfindung sind in der Beschreibung, der Zeichnung sowie den Unteransprüchen beschrieben.

Nach einer ersten vorteilhaften Ausführungsform kann der Drainagekanal den Ringsteg in radialer Richtung durchqueren, d.h. es ist bei dieser Ausführungsform eine radiale Strömungsverbindung zwischen dem Inneren des Steckdosentopfes und dessen Äußerem hergestellt.

Nach einer weiteren vorteilhaften Ausführungsform kann der Steckdosentopf an seinem inneren Umfangsrand einen Schlitz zur Aufnahme eines Erdungsbügels aufweisen, wobei der Drainagekanal zu dem Schlitz beabstandet ist. Hierdurch ist verhindert, dass Flüssigkeit von dem Drainagekanal in den Schlitz gelangt, in dem sich der Erdungsbügel befindet.

Nach einer weiteren vorteilhaften Ausführungsform kann sich der Drainagekanal über einen Winkelbereich von etwa 90° bis 180° und insbesondere über einen Winkelbereich von etwa 120° bis 140° entlang des Randes des Steckdosentopfes erstrecken. Auf diese Weise kann über einen großen Umfangsbereich Flüssigkeit in dem Drainagekanal aufgefangen werden, die bei gestecktem Stecker in den Steckdosentopf gelangt ist.

Nach einer weiteren vorteilhaften Ausführungsform kann an der äußeren Umfangswand des Ringstegs eine nur zum Inneren des Gehäuses hin offene Aufnahme für einen Erdungsbügel angeformt sein, wobei der Drainagekanal an der Außenseite der Aufnahme vorbeigeführt ist. Auch hierdurch ist sichergestellt, dass keine aus dem Steckdosentopf abgeleitete Flüssigkeit in das Innere des Gehäuses und insbesondere in den Bereich eines Erdungsbügels gelangen kann.

Nach einer weiteren vorteilhaften Ausführungsform, bei der an der äußeren Umfangswand des Ringstegs eine nur zum Inneren des Gehäuses hin offene Aufnahme für einen Erdungsbügel angeformt ist, kann der Drainagekanal in einem von dem Inneren des Gehäuses vollständig isolierten Kanalabschnitt durch die Aufnahme geführt sein. In diesem Fall ist ein Teil des Drainagekanals durch die Aufnahme hindurchgeführt, jedoch vom Inneren des Gehäuses isoliert.

Hierbei kann es vorteilhaft sein, wenn zumindest eine Austrittsöffnung des Kanalabschnitts in einer Ebene liegt, die orthogonal zur Vorderseite orientiert ist, beispielsweise in einer zur Vorderseite orthogonalen Horizontal- oder Vertikalebene. In diesem Fall kann die abzuleitende Flüssigkeit seitlich oder nach unten aus der Aufnahme austreten, wobei die Austrittsöffnungen in einer Frontalansicht nicht sichtbar sind.

Nach einer weiteren vorteilhaften Ausführungsform kann der Drainagekanal zur vorderen Stirnseite des Ringstegs beabstandet sein, so dass sich dieser nicht in der Kontaktebene zwischen Stecker und vorderer Stirnseite des Ringstegs befindet.

Nach einer weiteren vorteilhaften Ausführungsform kann die vordere Stirnseite des Ringstegs zur Bildung des Drainagekanals eine Stufe aufweisen. In diesem Fall ist der Drainagekanal durch einen in Richtung der Vorderseite stufenartig zurückgesetzten Abschnitt des Ringstegs gebildet.

Nach einer weiteren vorteilhaften Ausführungsform kann sich auf dem Ringsteg ein dessen Umfangswand und insbesondere auch dessen Stirnseite überdeckender Dichtring befinden, wobei der Drainagekanal zwischen dem Ringsteg und dem Dichtring verläuft. Hierbei kann der Drainagekanal in dem Ringsteg und/oder in dem Dichtring ausgebildet sein. Wenn der Drainagekanal nur in dem Dichtring ausgebildet ist, muss keine Formänderung des Ringstegs vorgesehen werden, so dass ein herkömmliches Steckdosengehäuse in Verbindung mit einem Dichtring verwendet werden kann. Der Dichtring kann dann als Zubehörteil ausgelegt werden, wobei das Steckdosengehäuse auch ohne Dichtring normkonform hergestellt werden kann.

Nach einer weiteren vorteilhaften Ausführungsform kann sich an der Vorderseite unter dem Dichtring eine insbesondere trichterförmige Einsenkung befinden, die mit dem Drainagekanal in Fluidverbindung steht, und die sich in radialer Richtung über den Dichtring hinaus erstreckt. Bei dieser Ausführungsform kann Flüssigkeit besonders zielgerichtet aus dem Inneren des Steckdosentopfes ausgeleitet werden und an der Vorderseite des Steckdosengehäuses austreten.

Nachfolgend wird die vorliegende Erfindung rein beispielhaft anhand vorteilhafter Ausführungsformen und unter Bezugnahme auf die beigefügten Zeichnungen beschrieben. Es zeigen:
- Fig. 1: eine perspektivische Ansicht eines Steckdosengehäuses;
- Fig. 2: eine weitere perspektivische Ansicht des Steckdosengehäuses von Fig. 1;
- Fig.3: eine Explosionsansicht einer weiteren Ausführungsform eines Steckdosengehäuses zusammen mit einem Dichtring und einem Stecker;
- Fig. 4: das Steckdosengehäuse von Fig. 3 mit aufgesetztem Dichtring; und
- Fig. 5: eine vergrößerte Teilschnittansicht des Steckdosengehäuses von Fig. 3 und Fig. 4.

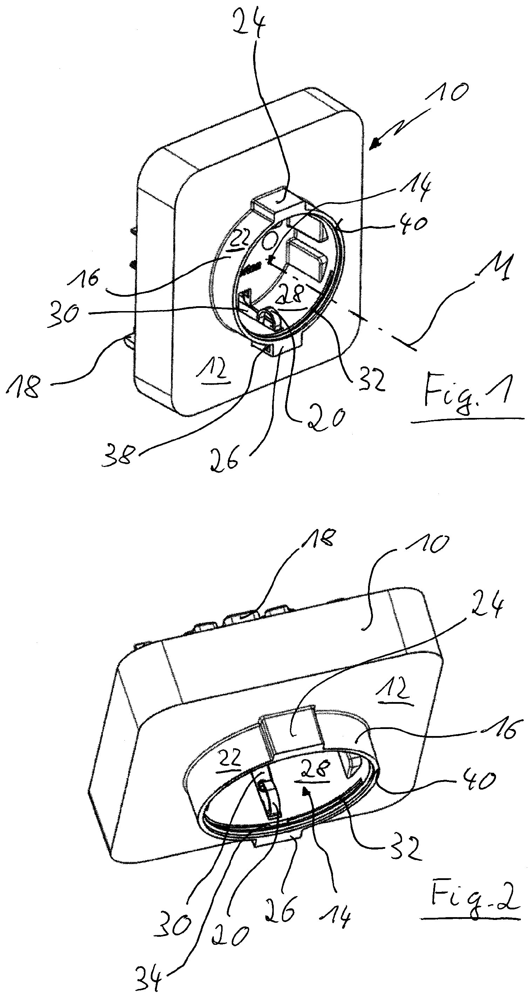

Fig. 1 und 2 zeigen ein Steckdosengehäuse 10 mit einer Vorderseite 12, von der aus ein Steckdosentopf 14 sich in das Innere des Steckdosengehäuses 10 erstreckt. Der Steckdosentopf 14 ist auf übliche Art und Weise symmetrisch zu einer Mittelachse M ausgebildet und steht in axialer Richtung mit einem Ringsteg 16 über die Vorderseite 12 des Steckdosengehäuses 10 vor. Im Inneren des Steckdosengehäuses 10 kann auf bekannte Art und Weise ein Steckdosensockel 18 angeordnet werden, an dem elektrische Kontakte und ein Erdungsbügel 20 befestigt sind.

Um ein Ausfedern des Erdungsbügels 20 bei eingestecktem Stecker zu ermöglichen, sind an der äußeren Umfangswand 22 des Ringstegs 16 jeweils eine obere Aufnahme 24 und eine untere Aufnahme 26 angeformt. In der inneren Umfangswand 28 des Steckdosentopfes 14 ist zur Aufnahme des Erdungsbügels 20 ein oberer Schlitz sowie ein unterer Schlitz 30 vorgesehen, wobei die Schlitze 30 sich jeweils im Bereich der zugehörigen Aufnahme 24 und 26 befinden.

Zum Ausleiten von Flüssigkeit, die sich bei eingestecktem Stecker im Inneren des Steckdosentopfes 14 angesammelt haben könnte, ist an der inneren Umfangswand 28 und am vorderen unteren Rand des Steckdosentopfes 14 ein Drainagekanal 32 vorgesehen. Dieser durchquert den Ringsteg 16 in axialer Richtung und dies bei dem dargestellten Ausführungsbeispiel nur im Bereich eines Kanalabschnitts 34 (Fig. 2), der oberhalb der unteren Aufnahme 26 und fluchtend mit dem Schlitz 30 positioniert ist. Hierbei ist der Drainagekanal 32 zu dem Schlitz 30 beabstandet, so dass keine Flüssigkeit aus dem Drainagekanal in den Schlitz strömen kann.

Wie Fig. 1 und 2 ferner verdeutlichen, verläuft der Drainagekanal im unteren Bereich des Steckdosentopfes 14 und über einen vergleichsweise großen Winkelbereich von beispielsweise etwa 120 bis 140° (gemessen relativ zur Mittelachse M).

Der den Ringsteg 16 durchdringende Kanalabschnitt 34 ist durch die Aufnahme 26 geführt und zwar in einem von dem Inneren des Steckdosengehäuses 10 vollständig isolierten Abschnitt, so dass keine Flüssigkeit in das Innere der Aufnahme 26 austreten kann. Bei dem dargestellten Ausführungsbeispiel weist der Kanalabschnitt 34 zwei seitliche Austrittsöffnungen 38 (Fig. 1) auf, die beide in einer zur Vorderseite 12 orthogonal orientierten Vertikalebene liegen, so dass die beiden Austrittsöffnungen 38 zu beiden Seiten der Aufnahme 26 angeordnet sind.

Wie Fig. 1 und Fig. 2 weiterhin verdeutlichen, ist der Drainagekanal 32 zur vorderen Stirnseite 40 des Ringstegs 16 beabstandet. Bei dieser Ausführungsform weist somit die vordere Stirnseite 40 des Ringstegs 14 keine Stufe oder Vertiefung auf.

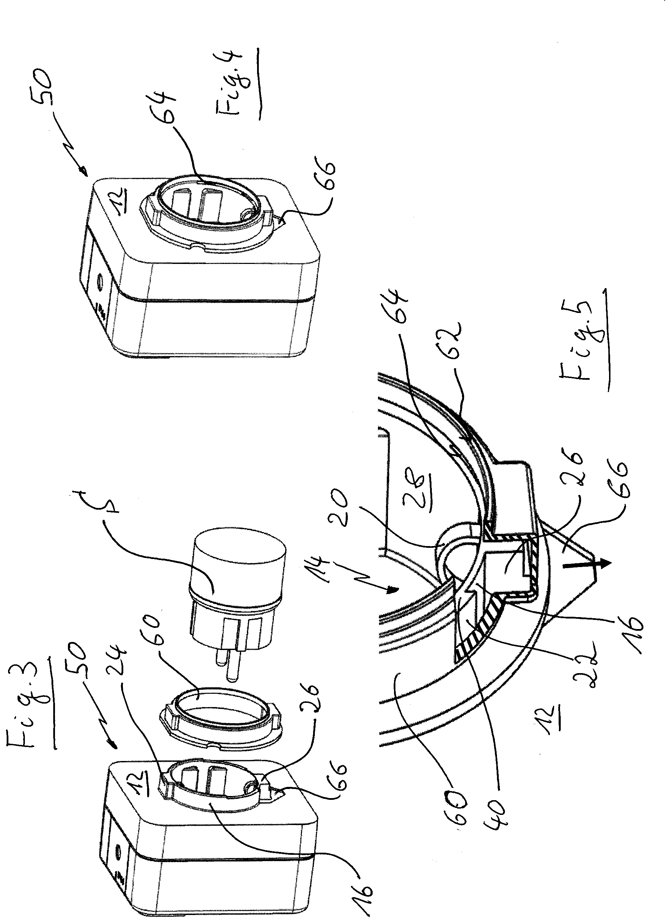

Fig. 3 bis 5 zeigen eine weitere Ausführungsform eines Steckdosengehäuses 50, wobei für gleiche Komponenten gleiche Bezugszeichen verwendet sind. Bei dem in Fig. 3 bis Fig. 5 dargestellten Ausführungsbeispiel eines Steckdosengehäuses 50 ist ein Dichtring 60 vorgesehen, der auf den Ringsteg 16 aufgesetzt werden kann und der im aufgesetzten Zustand den Ringsteg 16 und auch dessen Stirnseite 40 überdeckt. Der Dichtring 60 kann beispielsweise aus einem Elastomermaterial hergestellt sein und er ist in seiner Innen- und Außenkontur so gestaltet, dass er dichtend auf den Ringsteg 16 und die Aufnahmen 24 und 26 aufgesetzt werden kann. Durch Einstecken eines Steckers S in die Steckdose 50 dichtet dann der Dichtring 60 mit seiner vorderen Stirnseite 62 gegen den Stecker S ab.

Zur Bildung eines Drainagekanals 64 weist die vordere Stirnseite 40 des Ringstegs 16 bei dieser Ausführungsform einen zurückgesetzten Abschnitt in Form einer Stufe auf, die sich über annähernd 180° entlang des Ringstegs 16 erstreckt. Hierdurch kann Flüssigkeit im Bereich der Stufe zwischen dem Ringsteg 16 und dem Dichtring 60 aus dem Inneren des Steckdosentopfes 14 austreten, indem diese durch den Drainagekanal 64 in vertikaler Richtung nach unten fließt und sich zu beiden Seiten der Aufnahme 26 und auch vor der Aufnahme 26 sammelt. Für einen weiteren Austritt dieser Flüssigkeit ist an der Vorderseite 12 des Steckdosengehäuses 50 unterhalb des Dichtrings 60 eine trichterförmige Einsenkung 66 vorgesehen, die mit dem Drainagekanal 64 in Fluidverbindung steht, und die sich in radialer Richtung über den Dichtring 60 hinaus erstreckt. Hierdurch kann Flüssigkeit in Richtung des in Fig. 5 dargestellten Pfeils aus der Einsenkung 66 nach unten austreten.

Nach einer weiteren vorteilhaften Ausführungsform kann der Drainagekanal 64 in dem Dichtring 60 und auch in dem Ringsteg 16 ausgebildet sein. Eine einstückige Ausbildung von Dichtring 60 und Ringsteg 16, beispielsweise aus Hartplastik, ist auch möglich und entspricht dem Ausführungsbeispiel von Fig. 1 und 2.

Schließlich ist es auch möglich, das Steckdosengehäuse und den Dichtring im Zwei-Komponenten-Spritzgussverfahren herzustellen.

Gegenstand dieser Anmeldung ist auch eine Steckdose mit zumindest einem Steckdosengehäuse der vorstehend beschriebenen Art, in dem zumindest ein Steckdosensockel angeordnet ist.

## Patentansprüche

1. Steckdosengehäuse (10, 50) mit einer Vorderseite (12), von der aus sich ein Steckdosentopf (14) mit einer Mittelachse (M) in das Gehäuseinnere erstreckt, wobei der Steckdosentopf (14) in axialer Richtung mit einem Ringsteg (16) über die Vorderseite (12) des Steckdosengehäuses (10, 50) vorsteht und am vorderen unteren Rand des Steckdosentopfes (14) ein Drainagekanal (32, 64) zum Ausleiten von Flüssigkeit vorhanden ist.

2. Steckdosengehäuse nach Anspruch 1,
**dadurch gekennzeichnet,**
**dass** der Drainagekanal (32, 64) den Ringsteg (16) in radialer Richtung durchquert.

3. Steckdosengehäuse nach Anspruch 1 oder 2,
**dadurch gekennzeichnet,**
**dass** der Steckdosentopf (14) an seiner inneren Umfangswand (28) einen Schlitz (30) zur Aufnahme eines Erdungsbügels (20) aufweist, und dass der Drainagekanal (32, 64) zu dem Schlitz (30) beabstandet ist.

4. Steckdosengehäuse nach einem der vorstehenden Ansprüche,
**dadurch gekennzeichnet,**
**dass** sich der Drainagekanal (32, 64) über einen Winkelbereich von 90° - 180°, insbesondere über 120° - 140°, entlang des Randes des Steckdosentopfes (14) erstreckt.

5. Steckdosengehäuse nach einem der vorstehenden Ansprüche,
**dadurch gekennzeichnet,**
**dass** an der äußeren Umfangswand (22) des Ringstegs (16) eine nur zum Inneren des Steckdosengehäuses (50) hin offene Aufnahme (24, 26) für einen Erdungsbügel (20) angeformt ist, wobei der Drainagekanal (32, 64) an der Außenseite der Aufnahme (26) vorbeigeführt ist.

6. Steckdosengehäuse nach einem der vorstehenden Ansprüche 1-4,
**dadurch gekennzeichnet,**
**dass** an der äußeren Umfangswand (22) des Ringstegs (16) eine nur zum Inneren des Steckdosengehäuses (10) hin offene Aufnahme (24, 26) für einen Erdungsbügel (20) angeformt ist, wobei der Drainagekanal (32) in einem von dem Inneren des Steckdosengehäuses (10) vollständig isolierten Kanalabschnitt (34) durch die Aufnahme (26) geführt ist, und wobei insbesondere zumindest eine Austrittsöffnung (38) des Kanalabschnitts (34) in einer Ebene liegt, die orthogonal zur Vorderseite (12) orientiert ist.

7. Steckdosengehäuse nach einem der vorstehenden Ansprüche,
**dadurch gekennzeichnet,**
**dass** der Drainagekanal (32) zur vorderen Stirnseite (40) des Ringstegs (16) beabstandet ist.

8. Steckdosengehäuse nach einem der vorstehenden Ansprüche 1-6,
**dadurch gekennzeichnet,**
**dass** die vordere Stirnseite (40) des Ringstegs (16) zur Bildung des Drainagekanals (64) eine Stufe aufweist.

9. Steckdosengehäuse nach einem der vorstehenden Ansprüche 1-6 oder 8,
**dadurch gekennzeichnet,**
**dass** sich auf dem Ringsteg (16) ein dessen Umfangswand (22) und insbesondere auch dessen Stirnseite (40) überdeckender Dichtring (60) befindet, und dass der Drainagekanal (64) zwischen dem Ringsteg (16) und dem Dichtring (60) verläuft.

10. Steckdosengehäuse nach Anspruch 9,
**dadurch gekennzeichnet,**
**dass** der Drainagekanal in dem Dichtring (60) ausgebildet ist.

11. Steckdosengehäuse nach Anspruch 9 oder 10,
**dadurch gekennzeichnet,**
**dass** sich an der Vorderseite (12) unter dem Dichtring (60) eine insbesondere trichterförmige Einsenkung (66) befindet, die mit dem Drainagekanal (64) in Fluidverbindung steht, und die sich in radialer Richtung über den Dichtring (60) hinaus erstreckt.

12. Steckdose mit zumindest einem Steckdosengehäuse (10, 50) nach einem der vorstehenden Ansprüche, in dem zumindest ein Steckdosensockel (18) angeordnet ist.
